# EUROPÄISCHE PATENTSCHRIFT

(11) **EP 4 406 800 B1**
(45) Veröffentlichungstag und Bekanntmachung des Hinweises auf die Patenterteilung: **11.03.2026**
(21) Anmeldenummer: 24150923.1
(22) Anmeldetag: 09.01.2024
(51) Int. Cl.: B60W 30/18, B60K 28/06, B60W 50/14

(54) **VERFAHREN UND NOTHALTEVORRICHTUNG ZUM DURCHFÜHREN EINES ABGESICHERTEN NOTHALTEMANÖVERS EINES SICH BEWEGENDEN FAHRZEUGS**
METHOD AND EMERGENCY STOP DEVICE FOR CARRYING OUT A SECURED EMERGENCY STOP MANOEUVRE OF A MOVING VEHICLE
PROCÉDÉ ET DISPOSITIF DE RETENUE D'URGENCE POUR EXÉCUTER UNE MAN UVRE D'ARRÊT D'URGENCE SÉCURISÉE D'UN VÉHICULE EN MOUVEMENT

(30) Priorität: 27.01.2023 DE 102023200694
(43) Veröffentlichungstag der Anmeldung: 31.07.2024
(73) Patentinhaber: VOLKSWAGEN AG, 38440 Wolfsburg (DE)
(72) Erfinder: Münning, Dr. Daniel, 38124 Braunschweig (DE); Ackert, Lukas, 38373 Frellstedt (DE)

(56) Entgegenhaltungen:
- DE-A1- 102021 206 932
- US-A1- 2018 111 628
- US-A1- 2021 323 568

## Beschreibung

Die vorliegende Erfindung bezieht sich auf ein Verfahren und ein System zum Ausführen eines Nothaltemanövers in einem Notfall unter Beteilung eines Beifahrers.

Zur Erhöhung der Verkehrssicherheit von Kraftfahrzeugen sind als Nothalteassistenzsystem oder Nothalteassistent bezeichnete Systeme bekannt, die es ermöglichen, eine Fahruntüchtigkeit des Fahrers eines Kraftfahrzeugs mittels eines geeigneten Fahrerüberwachungssystems zu erkennen und bei Vorliegen einer Fahruntüchtigkeit das Fahrzeug ohne Gefährdung des Umgebungsverkehrs in einer sicheren Art und Weise automatisch zum Stillstand zu bringen. Beispielsweise soll hierbei bei einer Fahrt auf einer Autobahn das Fahrzeug auf den Standstreifen verbracht werden.

Fahruntüchtigkeit kann beispielsweise ein medizinisch bedingter Kontrollverlust des Fahrzeugführers über das Fahrzeug sein, der ein automatisches Überführen des Fahrzeugs in den Stillstand erforderlich macht. Ursachen hierfür können beispielsweise ein Herzinfarkt, Schlaganfall, Insulinschock, Niesanfall, epileptischer Anfall, Ohnmacht, etc. sein.

Nach der Feststellung der Fahreruntüchtigkeit überwacht im Stand der Technik ein System die Fahrzeugumgebung. Nur, wenn das Fahrzeugumfeld einen Fahrspurwechsel zulässt, wird eine interne Freigabe erteilt und ein Fahrspurwechsel ermöglicht. Dabei überwachen Heckradare die Fahrzeugumgebung, beispielsweise um schnell von hinten kommende Fahrzeuge rechtzeitig zu erkennen mit denen das Ego-Fahrzeug bei einem getriggerten Fahrspurwechsel kollidieren könnte. Es ist zu beachten, dass die Umfeldsensorik des Fahrzeugs Systemgrenzen unterliegt.

So kann der Fall auftreten, dass ein Spurwechsel/Standstreifenwechsel durch die Funktion sicher ausgeführt werden könnte, aber keine Freigabe erteilt wird, da beispielsweise die Vorausschau der Sensorik aufgrund der äußeren Umstände eingeschränkt ist. Als Beispiel sei ein Szenario genannt, in dem zähfließender Verkehr vorliegt. Dabei kann die Vorausschau auf die Markierungen durch die Frontkamera durch dicht vorausfahrende Vorderobjekte stark eingeschränkt sein. Für einen Spurwechsel ist auch besonders die Markierung der Nachbarspur relevant. Die Frontkamera ist in der Regel mittig im Fahrzeug in der Nähe des Innenspiegels montiert. Je nach Öffnungswinkel der Kamera liegt damit eine erhebliche Verdeckung der Nachbarspuren vor, besonders wenn ein großes Fahrzeug oder ein LKW vorausfährt.

Aus der US 2021/323568 A1 ist dabei beispielsweise ein Fahrzeugsteuerungssystem bekannt, welches auf der Grundlage des von der Fahrerüberwachungsvorrichtung überwachten Fahrerzustands eine Fahrerabnormalität bestimmt. Wenn diese vorliegt, wird das Fahrzeug abgebremst und ein Notstopp eingeleitet, wobei ein Insasse des Fahrzeugs durch eine Anzeige über die einzelnen Schritte des Notstopps informiert wird und eine Auswahlmöglichkeit zum Abbrechen des Notstopps erhält.

Der vorliegenden Erfindung liegt daher die Aufgabe zugrunde, die aus dem Stand der Technik bekannten Nachteile zu überwinden und ein Verfahren und ein System bereitstellen, welche eine erhöhte Anwendbarkeit eines Notfallassistenzsystems ermöglichen.

Die Aufgabe wird erfindungsgemäß durch die Gegenstände der unabhängigen Ansprüche gelöst. Vorteilhafte Ausführungsformen und Weiterbildungen der Erfindung sind Gegenstand der Unteransprüche.

Bei einem erfindungsgemäßen Verfahren zum Durchführen eines abgesicherten Nothaltemanövers eines sich bewegenden Fahrzeugs werden Fahrerzustandsdaten in Bezug auf eine Fahrtüchtigkeit eines Fahrers des Fahrzeugs durch wenigstens eine Fahrerüberwachungseinrichtung erfasst. Unter einer Fahruntüchtigkeit wird in diesem Zusammenhang jede Gegebenheit verstanden, bei welcher der Fahrer nicht (mehr) in der Lage ist, das Fahrzeug ordnungsgemäß zu steuern. Eine solche Fahruntüchtigkeit liegt beispielsweise im Fall eines Herzinfarkts, eines Schlaganfalls, eines Insulinschocks, eines epileptischen Anfalls, einer Ohnmacht des Fahrers oder dergleichen vor. Bei einem bevorzugten Verfahren wird die Fahrtüchtigkeit des Fahrers durch eine Fahrerüberwachungseinrichtung erfasst.

Es werden hierzu Fahrerzustandsdaten erfasst und ausgewertet. Bei der wenigstens einen Fahrerüberwachungseinrichtung handelt es sich bevorzugt im eine im Innenraum des Fahrzeugs angeordnete Kamera zur Überwachung des Fahrers, um einen Pulssensor, um eine Einrichtung zur Überwachung einer Lenkaktivität des Fahrers oder dergleichen.

Bei einer bevorzugten Ausführungsform überwacht ein Assistenzsystem die Lenkaktivität des Fahrers, beispielsweise ein Spurhalte- oder Linienassistent. Hierbei wäre es denkbar, dass ein erster Zeitraum vorgegebenen ist bzw. vorgebbar ist, in welchem keine Lenkaktivität des Fahrers erkannt wird, ohne dass eine Reaktion des Systems erfolgt. Bevorzugt kann das System nach dem Überschreiten des ersten Zeitraums ohne Lenkaktivität den Fahrer auffordern, die Lenkung zu übernehmen, beispielsweise durch visuelle, akustische und/oder haptische Reize. Bevorzugt kann ein zweiter Zeitraum vorgegebenen werden, innerhalb dessen auf eine Reaktion des Fahrers gewartet wird, insbesondere eine Reaktion des Fahrers als Reaktion auf die Aufforderung des Systems, beispielsweise dass der Fahrer erneut die Lenkung übernimmt oder seine Fahrtüchtigkeit z.B. über das HMI oder per Spracheingabe bestätigt.

Reagiert der Fahrer innerhalb dieses zweiten Zeitraums nicht auf die Aufforderung, die Lenkung zu übernehmen oder seine Fahrtüchtigkeit zu bestätigen, kann die Fahrerüberwachungseinrichtung die Fahruntüchtigkeit des Fahrers feststellen.

Alternativ oder zusätzlich hierzu ist es denkbar, dass eine Fahrerkamera, also eine Kamera, welche im Inneren des Fahrgastraums angeordnet ist und zur Überwachung des Fahrers dient, die Augen des Fahrers oder eine Gesichtsbewegung des Fahrers überwacht. Ebenso wäre es denkbar, dass ein Puls und/oder Blutdruck des Fahrers durch eine Fahrerüberwachungseinrichtung überwacht werden kann. Hierzu könnten beispielsweise Sensoren im Lenkrad und/oder im Fahrersitz angeordnet sein. Wird beispielsweise erkannt, dass der Fahrer beginnt einzuschlafen oder bereits eingeschlafen ist, kann die Fahrerüberwachungseinrichtung versuchen, den Fahrer wieder aufzuwecken, beispielsweise durch akustische und/oder haptische Reize (z.B. Vibration des Fahrersitzes oder des Lenkrads).

Auf Grundlage der erfassten Fahrerzustandsdaten kann die Fahrerüberwachungseinrichtung eine Fahruntüchtigkeit des Fahrers ermitteln und die Notwendigkeit eines Notstopps des Fahrzeug feststellen.

In einem weiteren Schritt des erfindungsgemäßen Verfahrens wird ein Nothalteassistenzsystem auf Grundlage der erfassten Fahrerzustandsdaten initialisiert, wobei das Nothalteassistenzsystem eine Anhalteposition für den Nothalt des Fahrzeugs und wenigstens ein geplantes Nothaltemanöver ermittelt. Bei einem bevorzugten Verfahren wird ausgehend von der aktuellen Position des Fahrzeugs insbesondere zusammen mit Daten eines Navigationssystems eine Anhalteposition ermittelt.

Bevorzugt handelt es sich bei der ermittelten Anhalteposition um eine solche Position, bei welcher für das Egofahrzeug, aber auch für den umliegenden Verkehr eine minimale Gefährdung bzw. ein minimales Gefährdungsrisiko vorliegt. Bewegt sich das Fahrzeug beispielsweise auf einer Autobahn, wird bevorzugt eine Anhalteposition auf dem Standstreifen ermittelt.

Bei einer bevorzugten Ausführungsform umfasst die Initialisierung des Nothalteassistenzsystems die Ermittlung eines geplanten Nothaltemanövers. Unter einem geplanten Nothaltemanöver wird in diesem Zusammenhang ein automatisches Fahrmanöver verstanden, um das Fahrzeug von seiner derzeitigen Position und Geschwindigkeit zum Stillstand an der ermittelten Anhalteposition zu bewegen. Hierbei ist es denkbar, dass bekannte Hindernisse oder Bestandteile der Straßeninfrastruktur (z.B. Dauerbaustelle, Absperrungen, Pannenbucht, etc.) bei der Ermittlung des geplanten Nothaltemanövers berücksichtigt werden.

Bevorzugt beinhaltet die Initialisierung des Nothalteassistenzsystems eine Warnung anderer Verkehrsteilnehmer und/oder des Umfelds des Fahrzeugs. Hierbei ist es denkbar, dass andere Verkehrsteilnehmer durch Warnblinken und/oder Hupen gewarnt werden.

Bei einem bevorzugten Verfahren wird nach der Initialisierung und bevorzugt während der Durchführung des gesamten Verfahrens versucht, den Fahrer nach einer Feststellung einer Fahruntauglichkeit zurückzubringen. Bevorzugt wird hierbei versucht den Fahrer durch visuelle und/oder akustische und/oder haptische Reize "aufzuwecken" bzw. dessen Aufmerksamkeit wieder auf das Führen des Fahrzeugs zu lenken.

In einem weiteren Schritt des erfindungsgemäßen Verfahrens werden Umfeldfelddaten mit wenigstens einer Umfelderfassungseinrichtung erfasst, wobei die Umfelddaten für eine Umgebung des Fahrzeugs charakteristisch sind. Bevorzugt handelt es sich bei der wenigstens einen Umfelderfassungseinrichtung um eine Frontkamera des Fahrzeugs und/oder um eine Rück(fahr)kamera und/oder einen Radar-Sensor und/oder einen Lidar-Sensor und/oder einen Ultraschallsensor oder dergleichen. Bei einer bevorzugten Ausführungsform ist die wenigstens eine Umfelderfassungseinrichtung dazu geeignet und bestimmt, die Anwesenheit von Objekten und/oder Fahrzeugen und/oder Hindernissen in der Umgebung des Fahrzeugs zu erfassen und/oder zu detektieren.

Hierbei ist es möglich, dass sowohl die eigene Fahrspur des Egofahrzeugs als auch benachbarte Fahrspuren als auch der Randbereich der Straße bzw. ein Standstreifen erfasst werden. Bevorzugt kann aus den erfassten Umfelddaten auf die Anwesenheit von anderen Fahrzeugen und deren (Relativ-)Geschwindigkeit geschlossen werden. Bei einer vorteilhaften Ausführungsform sind die Umfelddaten für ein Verkehrsaufkommen im Umfeld des Fahrzeugs und/oder für eine Infrastruktur im Umfeld des Fahrzeugs charakteristisch. Bei einer bevorzugten Ausführungsform handelt es sich bei der wenigstens einen Umfelderfassungseinrichtung um einen rückwärtigen Radarsensor, welcher bevorzugt dazu eingerichtet ist, ein von hinten kommendes Fahrzeug zu erfassen und/oder dessen (Relativ)-Geschwindigkeit zu ermitteln.

Bei einer bevorzugten Ausführungsform werden die Umfelddaten von mehr als einer Umfelderfassungseinrichtung erfasst und bevorzugt werden die Umfelddaten der einzelnen Umfelderfassungseinrichtungen zur Überprüfung bzw. Bestätigung der Umfelddaten der übrigen Umfelderfassungseinrichtungen verwendet. Beispielsweise könnte auf diesem Weg ein Abstand zu einem anderen Fahrzeug, welches durch eine Frontkamera erfasst wurde, durch eine Ultraschallsensoreinrichtung genauer bestimmt werden. Bevorzugt erfolgt dadurch eine redundante Bestimmung der Bedingungen im Umfeld des Fahrzeugs.

In einem weiteren Schritt des erfindungsgemäßen Verfahrens werden die Umfelddaten ausgewertet und eine Systemfreigabegröße zur Freigabe des geplanten Nothaltemanövers erzeugt. Bevorzugt werden die erfassten Umfelddaten in Abhängigkeit von der ermittelten Anhalteposition bzw. dem geplanten Nothaltemanöver ausgewertet. Bevorzugt werden die Umfelddaten dahingehend ausgewertet, ob ein automatisches Verbringen des Fahrzeugs von der derzeitigen Position zu der ermittelten Anhalteposition gemäß dem geplanten Nothaltemanöver gefahrlos möglich ist. Bei der Systemfreigabegröße handelt es sich erfindungsgemäß um eine Größe, welche für ein Gefahrenpotential des geplanten Nothaltemanövers charakteristisch ist.

Erfindungsgemäß kann das geplante Nothaltemanöver als sicher eingestuft werden. Beispielsweise ist in einem solchen Fall die Zielfahrspur frei, es nähert sich kein schnelles Fahrzeug von hinten und es wurden keine anderen Fahrzeuge und/oder andere Hindernisse erkannt, welche eine automatische Ausführung des geplanten Nothaltemanövers behindern bzw. gefährden würden. In diesem Fall kann das Verfahren damit beendet werden, dass das Fahrzeug automatisch zur ermittelten Anhalteposition gemäß dem geplanten Nothaltemanöver verbracht wird, wie dies unter anderem auch aus Verfahren aus dem Stand der Technik bekannt ist.

Erfindungsgemäß kann das geplante Nothaltemanöver als unsicher eingestuft werden. Beispielsweise ist die Zielfahrspur nicht frei und/oder es nähert sich von hinten ein schnelles Fahrzeug, welches im Fall eines Spurwechsels mit dem Egofahrzeug kollidieren würde oder ein Fahrspurwechsel ist aus einem anderen Grund nicht gefahrlos möglich. In diesem Fall kann das Verfahren damit beendet werden, dass das Fahrzeug auf der derzeitigen Fahrspur bleibt und automatisch bis zum Stillstand abgebremst wird. In diesem Fall unterscheidet sich die auszuführende bzw. ausgeführte Nothaltemanöver von dem (ursprünglich) geplanten Nothaltemanöver dahingehend, dass keinerlei Spurwechsel erfolgen.

Erfindungsgemäß kann das geplante Nothaltemanöver als bedingt sicher eingestuft werden. Darunter ist eine Situation denkbar, in welcher ein Fahrspurwechsel zwar prinzipiell gefahrlos möglich wäre (Zielfahrspur frei, kein sich von hinten schnell näherndes Fahrzeug oder dergleichen), aber eine automatische Freigabe des geplanten Nothaltemanövers nicht möglich ist. Dies könnte beispielsweise durch eine eingeschränkte Sicht der Frontkamera verursacht werden, z.B. durch einen vorausfahrenden LKW.

In einem solchen Fall kann das System bzw. der Nothalteassistent keine direkte Freigabe des geplanten Nothaltemanövers erteilen und es kann das Fahrzeug nicht automatisch gemäß dem geplanten Nothaltemanöver zur ermittelten Anhalteposition verbracht werden. Daher wird im Rahmen der vorliegenden Erfindung vorgeschlagen, eine Plausibilisierung bzw. eine weitere Überprüfung des geplanten Nothaltemanövers durchzuführen. Insbesondere soll zur Steigerung der Sicherheit ein weiterer Passagier des Fahrzeugs, bevorzugt ein Beifahrer involviert werden.

In einem weiteren Schritt des erfindungsgemäßen Verfahrens wird in Abhängigkeit von der erzeugten Systemfreigabegröße eine Aufforderung zur Freigabe des geplanten Nothaltemanövers durch einen weiteren Passagier des Fahrzeugs, insbesondere durch einen Beifahrer ausgelöst und eine Sonderfreigabegröße in Abhängigkeit von einer Eingabe des weiteren Passagiers, insbesondere des Beifahrers erfasst. Erfindungsgemäß wird für den Fall, dass das geplante Nothaltemanöver als bedingt sicher eingestuft wird (entsprechende Systemfreigabegröße) eine Aufforderung den weiteren Passagier, insbesondere den Beifahrer ausgegeben.

Bei einem bevorzugten Verfahren erfolgt eine solche Aufforderung über das HMI des Fahrzeugs. Bevorzugt erfolgt eine Aufforderung visuell und/oder akustisch und/oder haptisch.

Bevorzugt wird der weitere Passagier bzw. Beifahrer dazu aufgefordert, ein geplantes Nothaltemanöver zu bestätigten und/oder abzulehnen. Bei einer vorteilhaften Ausführungsform kann eine Eingabe des weiteren Passagiers bzw. Beifahrers über ein Betätigungselement des HMI und/oder ein separates Betätigungsmittel, welches bevorzugt räumlich getrennt von dem HMI angeordnet ist und/oder über Spracheingabe erfolgen. Bei einem bevorzugten Verfahren wird der weitere Passagier bzw. Beifahrer zu einer Eingabe innerhalb eines vorgegebenen bzw. vorgebbaren Zeitraums aufgefordert. Beispielsweise wird der Beifahrer aufgefordert, innerhalb von 10 Sekunden oder innerhalb einer Minute auf die Aufforderung mit einer Eingabe zu reagieren.

Bei einem bevorzugten Verfahren wird eine Eingabe, insbesondere durch Betätigung eines Betätigungsmittels als Bestätigung des geplanten Nothaltemanövers bzw. als Einstufung der Situation durch den Beifahrer als sicher bewertet. Bevorzugt wird eine nicht erfolgte und bevorzugt innerhalb eines vorgegeneben Zeitraums nicht erfolgte Eingabe als Ablehnung des geplanten Nothaltemanövers bzw. als Einstufung der Situation als unsicher gewertet.

Bei einem bevorzugten Verfahren erfolgt eine Eingabe durch einmaliges Betätigen eines Betätigungsmittels, bevorzugt durch mehrmaliges Betätigen eines Betätigungsmittels oder verschiedener Betätigungsmittel und besonders bevorzugt durch dauerhaftes Betätigen eines Betätigungsmittels. Hierbei ist es denkbar, dass der Beifahrer während der Ausführung des geplanten Nothaltemanövers dieses mehrfach oder dauerhaft bestätigen muss, um sicherzustellen, dass die Situation nach wie vor als sicher einzustufen ist bzw. um die Freigabe zur Ausführung des Nothaltemanövers aufrechtzuerhalten.

Bei einem vorteilhaften Verfahren erfolgt die Erzeugung der Sonderfreigabegröße durch dauerhaftes Betätigen eines Betätigungselements und/oder durch einmalige Betätigung eines weiteren Betätigungselements und/oder durch Sprachsteuerung. Bevorzugt handelt es sich bei dem weiteren Betätigungselement um ein Betätigungselement, welches beabstandet von dem HMI im Fahrzeug angeordnet ist. Bevorzugt ist ein solches Betätigungselement ähnlich zu einem E-call-Knopf oder einem Knopf zur Betätigung des Warnblinkers ausgestaltet.

Bei einem bevorzugten Verfahren wird in Abhängigkeit von der Eingabe des weiteren Passagiers bzw. des Beifahrers eine Sonderfreigabegröße erfasst. Bevorzugt entspricht die Sonderfreigabegröße (des Beifahrers) einer Bestätigung des geplanten Nothaltemanövers oder einer Verweigerung der Zustimmung zu dem geplanten Nothaltemanöver.

In einem weiteren Schritt des erfindungsgemäßen Verfahrens wird ein angepasstes Nothaltemanöver auf Grundlage der Systemfreigabegröße, der Sonderfreigabegröße und des geplanten Nothaltemanövers durchgeführt. Dies bietet den Vorteil, dass ein von dem System bzw. Nothalteassistenten als bedingt sicher eingestuftes Nothaltemanöver nach der Freigabe durch den Beifahrer in der geplanten oder auch in einer geänderten Art und Weise dennoch ausgeführt werden kann. Hierbei kann sich das angepasste Nothaltemanöver von dem geplanten Nothaltemanöver in Abhängigkeit von der Eingabe des Beifahrers und der Systemfreigabegröße mehr oder weniger stark unterscheiden.

Wie oben bereits ausgeführt, kann für den Fall, dass ein geplantes Nothaltemanöver als sicher oder unsicher durch das System eingestuft wird, es nicht notwendig sein, von einem weiteren Passagier, insbesondere Beifahrer eine Freigabe einzuholen. Entweder kann das Nothaltemanöver wie geplant automatisch ausgeführt werden (mit Fahrspurwechsel) oder automatisch an die Situation angepasst ausgeführt werden (ohne Fahrspurwechsel, Anhalten auf gegenwärtiger Fahrspur). Es wäre aber dennoch denkbar, dass auch für den Fall einer sicheren und/oder unsicheren Situation die Freigabe durch den Beifahrer angefordert wird, beispielsweise zur Erhöhung der Sicherheit, zur Erhöhung der Verlässlichkeit des Nothalteassistenzsystems oder zur Einhaltung rechtlicher Vorschriften, welche unter anderem ein solches Verfahren erst erlauben.

Bei einer bevorzugten Ausführungsform entspricht das geplante Nothaltemanöver dem angepassten Nothaltemanöver. Hierbei ist es denkbar, dass im Rahmen der Aufforderung zur Freigabe durch den weiteren Passagier bzw. durch den Beifahrer diesem das geplante und/oder freizugebende Notfallmanöver angezeigt wird.

Bei einer vorteilhaften Ausführungsform beinhaltet das geplante und/oder angepasste Nothaltemanöver wenigstens einen Fahrspurwechsel. Bevorzugt handelt es sich bei dem wenigstens einen Fahrspurwechsel um einen Fahrspurwechsel zwischen zwei benachbarten Fahrspuren und besonders bevorzugt um einen Fahrspurwechsel auf einen Standstreifen.

Bei einem vorteilhaften Verfahren ist die Systemfreigabegröße und/oder die Sonderfreigabegröße charakteristisch für den wenigstens einen Fahrspurwechsel und/oder eine zu befahrende Zielfahrspur. Mit anderen Worten bezieht sich eine Systemfreigabegröße bzw. Sonderfreigabegröße auf einen bestimmten auszuführenden Fahrspurwechsel. Bei einem bevorzugten Verfahren beinhaltet ein geplantes Nothaltemanöver und/oder ein angepasstes Nothaltemanöver wenigstens zwei Fahrspurwechsel und bevorzugt mehr als zwei Fahrspurwechsel. Hierbei ist es denkbar, dass die Systemfreigabegröße bzw. die Sonderfreigabegröße für nur einen Fahrspurwechsel charakteristisch ist, aber es wäre auch denkbar, dass die Systemfreigabegröße bzw. die Sonderfreigabegröße für mehr als einen Fahrspurwechsel charakteristisch ist.

Für den Fall, dass ein geplantes Nothaltemanöver mehr als einen auszuführenden Fahrspurwechsel beinhaltet, kann der weitere Passagier bzw. der Beifahrer zur Freigabe derselben aufgefordert werden. Hierbei ist es denkbar, dass der weitere Passagier bzw. der Beifahrer eine Freigabe für alle auszuführenden Fahrspurwechsel erteilt oder auch nur eine Freigabe für einen ersten auszuführenden Fahrspurwechsel. Bevorzugt wird der weitere Passagier bzw. Beifahrer nachdem ein erster Fahrspurwechsel ausgeführt wurde erneut aufgefordert, einen weiteren Fahrspurwechsel freizugeben.

Bei einem bevorzugten Verfahren ist die Systemfreigabegröße und/oder die Sonderfreigabegröße charakteristisch für eine zu befahrende Zielfahrspur. Hierbei ist es denkbar, dass die Zielfahrspur im Hinblick auf Sicherheit bewertet wird. Beispielsweise könnte eine Zielfahrspur als bedingt sicher eingestuft werden, weil auf dieser Rollsplit, Nässe oder dergleichen erkannt wird.

Bei einer bevorzugten Ausführungsform beinhaltet die Aufforderung an den weiteren Insassen des Fahrzeugs, insbesondere an den Beifahrer weitere Informationen. Hierbei ist es denkbar, dass dem weiteren Passagier bzw. dem Beifahrer Informationen ausgegeben werden, warum ein geplantes Nothaltemanöver und/oder ein geplanter Fahrspurwechsel durch das System als sicher, unsicher oder bedingt sicher eingestuft wurde. Beispielsweise wird ein geplantes Nothaltemanöver als bedingt sicher eingestuft, weil die Vorausschau der Frontkamera stark eingeschränkt ist oder die Zielfahrspur Spurrillen aufweist und/oder nass ist. Dies bietet den Vorteil, dass der Beifahrer besser einschätzen kann, ob er ein geplantes Nothaltemanöver freigaben kann oder dies eher verweigern sollte.

Bei einer vorteilhaften Ausführungsform wird eine Anwesenheit eines Beifahrers durch wenigstens eine Beifahrererkennungseinrichtung erfasst. Bei der wenigstens einen Beifahrererkennungseinrichtung handelt es sich bevorzugt um eine Innenkamera des Fahrzeugs oder um eine Sensoreinrichtung zur Erkennung, ob ein Sitzplatz belegt ist. Bei einem bevorzugten Verfahren wird die Anwesenheit des weiteren Passagiers bzw. des Beifahrers vor der Aufforderung zur Freigabe des geplanten Nothaltemanövers erfasst.

Bei einem vorteilhaften Verfahren kann die Sonderfreigabegröße durch den Beifahrer zurückgezogen werden, insbesondere jederzeit zurückgezogen werden. Dies bietet den Vorteil, dass ein Nothaltemanöver jederzeit abgebrochen bzw. beendet werden kann, insbesondere durch den Beifahrer. Damit wird beispielsweise dem Fall Rechnung getragen, dass spontan ein Hindernis auf einer Zielfahrspur auftaucht oder ein sehr schnelles Fahrzeug von hinten kommt, was zum Zeitpunkt der automatischen Erfassung der Umfelddaten noch nicht ersichtlich war. Ebenso wäre ein Szenario denkbar, dass der Beifahrer auf der Zielfahrspur ein Hindernis oder eine Beeinträchtigung wie Glätte, Nässe oder dergleichen entdeckt, dies aber von einer Umfelderfassungseinrichtung des Fahrzeugs nicht erkannt wird.

Bevorzugt kann das Verfahren zu jedem beliebigen Zeitpunkt, insbesondere durch Eingreifen des weiteren Passagiers, bevorzugt des Beifahrers unterbrochen und/oder beendet werden. Bevorzugt kann ein Schritt des Verfahrens und/oder die Ausführung des Nothaltemanövers und/oder die Erteilung der Sonderfreigabe durch einen weiteren Passagier, insbesondere durch den Beifahrer abgebrochen bzw. beendet werden. Bevorzugt erfolgt ein Abbrechen eines der vorgenannten Schritte durch eine Eingabe des weiteren Passagiers, insbesondere des Beifahrers. Hierbei ist es denkbar, dass die Eingabe des weiteren Passagiers, insbesondere des Beifahrers über das HMI und/oder ein spezielles Betätigungselement und/oder per Sprachsteuerung erfolgt. Beispielsweise könnte das Verfahren durch ein lautes Rufen des Wortes "Abbruch" oder eines anderen geeigneten (Code-)Wortes, insbesondere vorgebbaren Wortes erfolgen, welches vom System als Abbruch-Befehl verstanden wird.

Bei einem vorteilhaften Verfahren wird das angepasst Nothaltemanöver auf Grundlage von weiteren Umfelddaten durchgeführt, wobei die weiteren Umfelddaten von einer Frontkamera des Fahrzeugs erfasst werden. Bevorzugt sind die weiteren Umfelddaten charakteristisch für eine Vorausschau des Fahrzeugs. Bevorzugt werden die weiteren Umfelddaten ausgewertet und eine Umfeldgröße ermittelt, welche für die Vorausschau der Frontkamera des Fahrzeugs charakteristisch ist. Bevorzugt handelt es sich bei dieser Umfeldgröße um ein Maß für einen erfassten Bereich der Frontkamera oder um einen Ausschnitt des erfassten Bereichs. Eine solche beispielhafte Umfeldgröße beinhaltet eine Blickweite der Frontkamera (von z.B. 10m) oder einen sichtbaren Ausschnitt, sodass beispielsweise nur ein bestimmter Ausschnitt sichtbar ist, da der restliche Teil durch ein vorausfahrendes Fahrzeug verdeckt wird.

Bevorzugt ist ein Schwellenwert für die Umfeldgröße vorgegeben und/oder vorgebbar. Bei einem bevorzugten Verfahren erfolgt eine Ermittlung eines angepassten Nothaltemanövers auf Grundlage dieser Umfeldgröße. Hierbei ist es denkbar, dass für den Fall, dass die Umfeldgröße diesen Schwellenwert unter- oder überschreitet, eine Ermittlung des angepassten Nothaltemanövers unterschiedlich erfolgt. Bietet beispielsweise die Frontkamera eine ausreichende Sicht auf die Zielfahrspur, kann eine Bahnplanung für den Fahrspurwechselvorgang auf Grundlage der erfassten Zielfahrspur erfolgen und das Fahrzeug passend auf der Zielfahrspur zum Stillstand gebracht werden.

Liegt die ermittelte Umfeldgröße unterhalb des vorgegebenen Schwellenwerts, beispielsweise beträgt die Sichtweite der Frontkamera nur 10m oder ein maßgeblicher Anteil der Sicht ist verdeckt (z.B. durch ein anderes Fahrzeug), kann keine Bahnplanung auf Grundlage der Zielfahrspur erfolgen. Daher wird vorgeschlagen für den Fall, dass eine Nachbarfahrspur sichtbar ist, dass deren Breite ermittelt wird und davon ausgehend die nicht sichtbare vorausliegende Strecke prädiziert wird, wobei eine Geometrie der Zielfahrspur ebenfalls prädiziert wird.

Ist es nicht möglich, die Breite der Nachbarspur zu ermitteln, wird alternativ hierzu vorgeschlagen, eine Standardbreite der Zielfahrspur anzunehmen. Zusätzlich kann die Geometrie der Ego-Fahrspurenklothoide auf die Nachbarfahrspur projiziert werden. Anhand dieser Informationen kann dann ein "Standardspurwechselmanöver" durchgeführt werden, auch wenn die Sichtweite der Frontkamera stark eingeschränkt ist.

Bei einem bevorzugten Verfahren wird ein automatischer Notruf abgesetzt und bevorzugt werden Daten in Bezug auf eine aktuelle Position und/oder in Bezug auf die ermittelte Anhalteposition übertragen. Dies bietet den Vorteil, dass vor oder während der Ausführung des Nothaltemanövers bereits ein Notarzt alarmiert werden kann und dieser durch Kenntnis der geplanten Anhalteposition schneller zum Fahrer gelangen und diesen versorgen kann.

Das Verfahren betrifft insbesondere Verfahren zur Steigerung der Verfügbarkeit eines Nothalteassistenzsystems durch Beifahrerinteraktion.

Die vorliegende Erfindung ist weiterhin gerichtet auf eine, insbesondere Prozessor-basierte, Nothaltevorrichtung zum Durchführen eines abgesicherten Nothaltemanövers eines sich bewegenden Fahrzeugs, wobei die Nothaltevorrichtung dazu geeignet und bestimmt ist, Fahrerzustandsdaten in Bezug auf eine Fahrtüchtigkeit eines Fahrers des Fahrzeugs von einer Fahrerüberwachungseinrichtung (des Fahrzeugs) abzurufen. Weiterhin ist die Nothaltevorrichtung dazu geeignet und bestimmt, Umfelddaten von einer Umfelderfassungseinrichtung (des Fahrzeugs) abzurufen, wobei die Umfelddaten für die Umgebung des Fahrzeugs charakteristisch sind.

Das Fahrzeug weist ein Nothalteassistenzsystem auf, welches dazu geeignet und bestimmt ist, eine Anhalteposition für den Nothalt des Fahrzeugs und wenigstens ein geplantes Nothaltemanöver zu ermitteln.

Die Nothaltevorrichtung weist eine, insbesondere Prozessor-basierte, Auswertungseinrichtung zum Auswerten der Umfelddaten und zum Erzeugen einer Systemfreigabegröße zur Freigabe eines (von dem Nothalteassistenzsystem) geplanten Nothaltemanövers auf.

Weiterhin weist die Nothaltevorrichtung eine, insbesondere Prozessor-basierte, Überprüfungseinrichtung auf, welche dazu geeignet und bestimmt ist, in Abhängigkeit von der erzeugten Systemfreigabegröße eine Aufforderung zur Freigabe des geplanten Nothaltemanövers durch einen weitere Passagier des Fahrzeugs, insbesondere durch einen Beifahrer, auszulösen und eine Sonderfreigabegröße in Abhängigkeit von einer Eingabe des weiteren Passagiers, insbesondere des Beifahrers zu erfassen.

Weiterhin ist in dem Fahrzeug eine, insbesondere Prozessor-basierte, Einrichtung zum Ausführen eines automatischen Fahrmodus und zum Durchführen des geplanten Nothaltemanövers vorgesehen.

Erfindungsgemäß ist die Nothaltevorrichtung dazu geeignet und bestimmt, ein Durchführen eines angepassten Nothaltemanövers auf Grundlage der Systemfreigabegröße, der Sonderfreigabegröße und des geplanten Nothaltemanövers (durch die Einrichtung zum Ausführen eines automatischen Fahrmodus und zum Durchführen des geplanten Nothaltemanövers) auszulösen.

Bei einer bevorzugten Ausführungsform ist die Überprüfungseinrichtung dazu eingerichtet, die Aufforderung zur Freigabe des geplanten Nothaltemanövers über das HMI und/oder über einen Lautsprecher auszulösen. Bevorzugt ist die Einrichtung zum Ausführen eines automatischen Fahrmodus dazu geeignet und bestimmt, zum Durchführen eines angepassten Nothaltemanövers die Systemfreigabegröße, die Sonderfreigabegröße, das geplante Nothaltemanöver und/oder insbesondere eine Umfeldgröße zu berücksichtigen.

Bei einer bevorzugten Ausführungsform handelt es sich bei der wenigstens einen Umfelderfassungseinrichtung um eine Umfelderfassungseinrichtung, welche ausgewählt ist aus einer Gruppe umfassend Frontkamera, Rück(fahr)-kamera, Ultraschallsensor, LIDAR-Sensor, Radar-Sensor und dergleichen. Bevorzugt ist eine Speichereinrichtung vorgehsehen, auf welcher zumindest teilweise und/oder zumindest zeitweise die von der wenigstens einen Umfelderfassungseinrichtung erfassten Umfelddaten ablegbar sind.

Bei einer bevorzugten Ausführungsform handelt es sich bei der Fahrerüberwachungseinrichtung um eine fahrzeuginterne Kamera, wie eine Fahrerkamera, um einen Puls- und/oder Blutdrucksensor und/oder um ein Assistenzsystem zur Überwachung einer Lenkaktivität (z.B. Spurhalte- oder Linienassistent). Bei einer bevorzugten Ausführungsform ist eine Beifahrererkennungseinrichtung zum Erfassen der Anwesenheit eines Beifahrers und/oder eines weiteren Passagiers vorgesehen, wobei es sich bei der Beifahrererfassungseinrichtung bevorzugt um eine fahrzeuginterne Kamera handelt, eine Einrichtung zur Sitzplatzerkennung oder Anschnallgurterkennung.

Erfindungsgemäß ist die Nothaltevorrichtung dazu geeignet und bestimmt, ein Durchführen eines angepassten Nothaltemanövers auf Grundlage der Systemfreigabegröße, der Sonderfreigabegröße und des geplanten Nothaltemanövers (durch die Einrichtung zum Ausführen eines automatischen Fahrmodus und zum Durchführen des geplanten Nothaltemanövers) auszulösen.

Die vorliegende Erfindung ist weiterhin gerichtet auf ein Fahrzeug, insbesondere Kraftfahrzeug, umfassend eine obig beschriebene Nothaltevorrichtung entsprechend einer Ausführungsform. Bevorzugt handelt es sich bei der Nothaltevorrichtung um einen (festen, insbesondere einen nicht zerstörungsfrei lösbaren) Bestandteil des Fahrzeugs.

Bei dem Fahrzeug kann es sich insbesondere um ein (motorisiertes) Straßenfahrzeug handeln. Darüber hinaus kann es sich bei dem Fahrzeug neben einem Straßenfahrzeug auch um ein Flugtaxi, ein Flugzeug und ein anderes Fortbewegungsmittel oder eine andere Fahrzeugart handeln, beispielsweise ein Luft-, Wasser- oder Schienenfahrzeug.

Weitere Vorteile und Ausführungsformen ergeben sich aus der beigefügten Zeichnung: Darin zeigt:

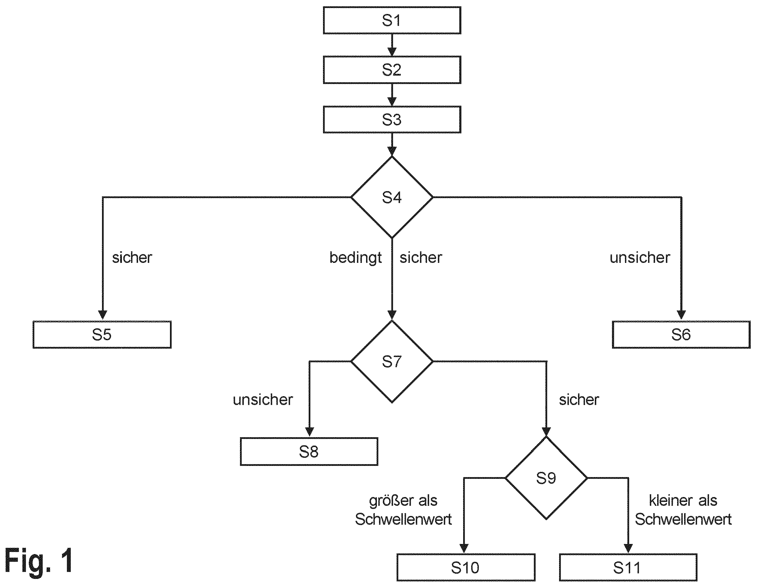

- Fig. 1: ein Fließschema eines Verfahrens gemäß einer Ausführungsform der vorliegenden Erfindung.

In einem Verfahrensschritt S1 werden Fahrerzustandsdaten in Bezug auf eine Fahrtüchtigkeit eines Fahrers des Fahrzeugs durch eine Fahrerüberwachungseinrichtung erfasst. Hierbei kann festgestellt werden, ob eine Fahruntüchtigkeit des Fahrers vorliegt, beispielsweise keine Fahreraktivität oder ein medizinischer Notfall. Dies kann dann beispielsweise erfolgen, wenn das Fahrzeug durch ein Assistenzsystem geführt wird und über längere Zeit keine Rückmeldung durch den Fahrer erfolgt (z.B. keine Lenkaktivität). Weiterhin kann eine Auswertung über eine Fahrerbeobachtungskamera erfolgen und Schlaf oder ein medizinischer Notfall können erkannt werden oder durch eine Betätigung eines Notknopfs durch den Beifahrer.

Nach der Feststellung eines der im vorherigen Absatz genannten Fälle erfolgt eine automatische Initialisierung des Nothalteassistenzsystems (Verfahrensschritt S2). Das System hat zum Ziel, einen sicheren Zustand herbei zu führen und das Fahrzeug an einer sicheren Stelle zum Stillstand zu bringen. Dabei wird primär Energie aus dem System genommen indem das Fahrzeug abgebremst wird. Weiterhin werden Versuche gestartet, den Fahrer zurückzuholen. Dafür gibt es verschiedene Warnkanäle. Es wird visuell, akustisch und haptisch gewarnt (Bremsgurte, Gurtrucke).

Weiterhin wird der umliegende Verkehr mittels Warnblinken und Hupen gewarnt. Als weiteres Ziel gilt es, einen sicheren Abstellort für das Fahrzeug anzufahren. Auf einer Autobahn bedeutet dies, die Fahrspuren zu verlassen und auf den Standstreifen zu wechseln. Bevorzugt wird hierbei eine Trajektorie des Fahrzeugs zum Erreichen der ermittelten Anhalteposition aus prädikativen Streckeninformation des Navigationssystems ermittelt.

In einem weiteren Verfahrensschritt S3 prüft das System die Fahrzeugumgebung. Es wird zum einen das umliegende Verkehrsaufkommen bewertet und zum anderen die umgebende Infrastruktur. Hierbei werden Umfelddaten in Bezug auf die Fahrzeugumgebung erfasst, beispielsweise werden Aufnahmen durch eine Frontkamera oder eine Rückfahrkamera aufgenommen. Ebenso kann ein Heckradar eingesetzt werden, welches überprüft, ob sich von hinten ein schnelles Fahrzeug nähert, mit welchem das Egofahrzeug im Fall eines Spurwechsels kollidieren würde.

Da das System an dieser Stelle selbstständig und aufgrund des ausgefallenen Fahrers nicht fahrerüberwacht handelt, ist die Absicherung der Umgebung besonders wichtig, um keine anderen Personen oder Fahrzeuge zu gefährden. In einem weiteren Verfahrensschritt S4 wertet das System die erfassten Umfelddaten aus. Hierbei sind verschiedene Ergebnisse möglich, angefangen bei einer Situation, bei welcher ein Spurwechsel gefahrlos/problemlos möglich ist bis hin zu Fällen, in dem die Umfelddaten einen Spurwechsel ausschließen. Ebenso sind Situationen zwischen den beiden Grenzfällen denkbar.

Wird der Fall ermittelt, dass die ein automatischer Spurwechsel gefahrlos möglich ist, da sich beispielsweise auf der anzufahrenden Spur keinerlei andere Fahrzeuge oder Objekte befinden (Auswertung der Daten der Front- und/oder Rückkamera) und eine Messung einer rückwärtiger Radareinrichtung keine sich nähernden Fahrzeuge zeigt, werden alle Bedingungen durch das System als sicher eingestuft und das entsprechende Flag Wechselfreigabe_System auf den Wert 1 (sicher) gesetzt. In diesem Fall wird das Verfahren mit dem Schritt S5 fortgesetzt und das Fahrzeug automatisch an die vorgesehene Anhalteposition verbracht, wie dies beispielsweise aus dem Stand der Technik bekannt ist.

Wird eine unsichere Situation erkannt, beispielsweise wenn die Fahrspur, auf welche gewechselt werden soll vollständig belegt ist, sich keine Lücke für einen Fahrspurwechsel bietet oder ein schnell von hinten kommendes Fahrzeug erkannt wird, welches mit dem Egofahrzeug im Fall eines Spurwechsels kollidieren würde, wird das entsprechende Flag Wechselfreigabe_System auf den Wert 0 (unsicher) gesetzt. In diese Fall wird das Verfahren mit dem Schritt S6 fortgesetzt und das Fahrzeug auf der derzeitigen Fahrspur abgebremst und zum Stehen gebracht, ohne dass ein Spurwechsel ausgeführt wird.

Zwischen diesen beiden Grenzfällen (sichere und unsicher Situation) sind auch Zwischenfälle möglich. Erkennt das System beispielsweise, dass die Fahrspur, auf welche gewechselt werden soll, im Bereich neben dem Fahrzeug und hinter dem Fahrzeug frei ist und sich auch kein Fahrzeug von hinten nähert, ist ein Spurwechsel prinzipiell gefahrlos möglich. Hierbei kann es aber sein, dass das Blickfeld der Frontkamera zu stark eingeschränkt ist (beispielsweise durch einen nahe vorausfahrenden LKW) oder relevante Fahrbahnmarkierungen der zu befahrenden Spur können nicht ausreichend erkannt werden. In diesem Fall handelt es sich um eine bedingt sichere Situation und das Flag Wechselfreigabe_System wird auf den Wert 2 (bedingt sicher) gesetzt. In einem solchen Fall kann das System nicht selbstständig einen Fahrspurwechsel oder Standstreifenwechsel veranlassen.

Sofern ein Beifahrer im Fahrzeug sitzt, kann das Verfahren mit dem Schritt S7 fortgesetzt werden und eine Sonderfreigabe durch den Beifahrer erteilt werden. Somit geht eine Teilverantwortung auf den Beifahrer über. Dieser muss sicherstellen, dass die neue Zielfahrspur bzw. der Zielstandstreifen sicher für einen Wechsel ist. Im Verfahrensschritt S7 fordert das System eine Freigabe durch den Beifahrer an, beispielsweise über eine Anzeige im HMI oder über einen Lautsprecher. Der Beifahrer kann eine solche Sonderfreigabe beispielsweise durch Betätigen eines entsprechenden Betätigungselements des HMI erteilen und auch verweigern. Eine weitere Voraussetzung ist allerdings, dass das System zunächst die Anwesenheit eines Beifahrers detektiert, beispielsweise durch eine Sitzplatzerkennung, Anschnallgurterkennung oder eine Innenraumkamera.

Schätzt nun der Beifahrer die Situation als unsicher ein, da sich beispielsweise im verdeckten (für die Frontkamera nicht ersichtlichen) Bereich ein Objekt wie ein anderes Fahrzeug befindet und es im Fall eines Spurwechsels zu einer potentiell gefährlichen Situation kommen könnte, kann der Beifahrer die Freigabe verweigern, beispielsweise durch das Betätigen eines entsprechenden Ablehnen-Betätigungselements oder durch Nichtreagieren auf die Freigabeaufforderung des Systems. In diesem Fall wird das Flag Sonderfreigabe_Spurwechsel_Beifahrer auf einen Wert 0 bzw. false gesetzt und das Verfahren mit dem Schritt S8 fortgesetzt.

Der Verfahrensschritt S8 entspricht im Wesentlichem dem Verfahrensschritt S6, bei welchem das Fahrzeug auf der derzeitigen Fahrspur angehalten wird, ohne dass eine Spurwechsel ausgeführt wird.

Schätzt der Beifahrer die Situation hingegen als sicher ein, kann er eine Sonderfreigabe zum Ausführen des Fahrspurwechsels erteilen. Hierbei muss der Beifahrer dauerhaft die Umgebung überwachen und die sichere Wechselmöglichkeit durch das dauerhafte Betätigen eines Betätigungselements im HMI bestätigen, wodurch das Flag Sonderfreigabe_Spurwechsel_Beifahrer auf einen Wert 1 bzw. true gesetzt wird. Alternativ oder zusätzlich zu einem dauerhaften Betätigen des Betätigungselements kann der Beifahrer einen speziellen Knopf einmalig betätigen. Ein solcher Knopf kann beispielsweise an einer besonderen Stelle des Fahrzeugs angeordnet sein (ähnlich zu Knopf für Warnblinker) und der Aufmachung des "E-call"-Knopfs ähneln. Ebenso wäre eine Bestätigung via Sprachbedienung oder mehrmalige Bestätigung über das HMI möglich. Zusätzlich kann die Freigabe durch einen z.B. "Not-Aus-Knopf", durch nicht mehr dauerhaftes Betätigen des Betätigungselements oder durch eine Spracheingabe jederzeit unterbrochen werden, wodurch das Flag Sonderfreigabe_Spurwechsel_Beifahrer auf 0 bzw. false gesetzt wird.

Erteilt der Beifahrer die Sonderfreigabe, so kann das Verfahren mit dem Schritt S9 fortgesetzt werden und ein automatischer Spurwechsel ausgeführt werden. Auf welche Art dieser ausgeführt wird, ist abhängig von der Vorausschau der Frontkamera. Ist die Vorausschau der Frontkamera kleiner als ein vorgegebener Schwellenwert wird das Verfahren mit dem Schritt S10 fortgesetzt, ist die Vorausschau der Frontkamera größer als ein vorgegebener Schwellenwert, so wird das Verfahren mit dem Schritt S11 fortgesetzt.

Hat die Kamera eine ausreichende Sichtweite (Vorausschau größer als Schwellenwert), kann eine Bahnplanung für den Wechselvorgang durchgeführt werden und das Fahrzeug gemäß dem Verfahrensschritt S10 passend auf der Zielfahrspur abgestellt werden.

Ist die Vorausschau der Frontkamera geringer als ein vorgegebener Schwellenwert, also ist beispielsweise ein wesentlicher Teil des Blickbereichs der Frontkamera verdeckt (z.B. durch einen LKW) oder beträgt die Sichtweite nur 10 Meter, wird das Verfahren mit dem Schritt S11 fortgesetzt. In diesem Fall ist keine saubere Bahnplanung möglich. Sofern die Nachbarspur sichtbar ist, wird deren Breite ermittelt und für die nicht sichtbare vorausliegende Strecke prädiziert. Eine Geometrie der Fahrspur wird ebenfalls prädiziert. Ist es nicht möglich, die Breite der Nachbarspur zu ermitteln, wird eine Standardbreite angenommen. Zusätzlich kann die Geometrie der Ego-Fahrspurenklothoide auf die Nachbarspur projiziert werden. Anhand dieser Informationen kann ein "Standardspurwechselmanöver" durchgeführt werden, auch wenn die Sichtweite der Kamera stark eingeschränkt ist.

Ein Abbruch des Wechselmanövers ist dabei in allen Verfahrensschritten jederzeit möglich, falls doch ein Objekt im Wechselbereich erkannt wird.

### Bezugszeichenliste

- S1: Erfassen von Fahrerzustandsdaten
- S2: Initialisierung Nothalteassistenzsystem
- S3: Erfassen von Umfelddaten
- S4: Auswertung der Umfelddaten
- S5: automatisches Nothaltemanöver mit Spurwechsel
- S6: automatisches Nothaltemanöver auf bisheriger Fahrspur
- S7: Auslösung Freigabe-Abfrage
- S8: automatisches Nothaltemanöver auf bisheriger Fahrspur
- S9: Auswerten weiterer Umfelddaten in Bezug auf Schwellenwert
- S10: automatisches Nothaltemanöver mit Spurwechsel
- S11: automatisches Nothaltemanöver mit Spurwechsel

## Patentansprüche

1. Verfahren zum Durchführen eines abgesicherten Nothaltemanövers eines sich bewegenden Fahrzeugs umfassend die Schritte:
- Erfassen (S1) von Fahrerzustandsdaten in Bezug auf eine Fahrtüchtigkeit eines Fahrers des Fahrzeugs durch wenigstens eine Fahrerüberwachungseinrichtung;
- Initialisieren (S2) eines Nothalteassistenzsystems auf Grundlage der erfassten Fahrerzustandsdaten, wobei das Nothalteassistenzsystem eine Anhalteposition für den Nothalt des Fahrzeugs und wenigstens ein geplantes Nothaltemanöver ermittelt;
- Erfassen (S3) von Umfelddaten mit wenigstens einer Umfelderfassungseinrichtung, wobei die Umfelddaten für eine Umgebung des Fahrzeugs charakteristisch sind;
- Auswerten (S4) der Umfelddaten und Erzeugen einer Systemfreigabegröße zur Freigabe des geplanten Nothaltemanövers, wobei es sich bei der Systemfreigabegröße um eine Größe handelt, welche für ein Gefahrenpotential des geplanten Nothaltemanövers, welches als sicher, unsicher oder bedingt sicher eingestuft wird, charakteristisch ist;
- In Abhängigkeit von der erzeugten Systemfreigabegröße, für den Fall, dass das geplante Nothaltemanöver als bedingt sicher eingestuft wurde, Auslösen (S7) einer Aufforderung zur Freigabe des geplanten Nothaltemanövers durch einen Beifahrer und Erfassen einer Sonderfreigabegröße in Abhängigkeit von einer Eingabe des Beifahrers;
- Durchführen (S8, S10, S11) eines angepassten Nothaltemanövers auf Grundlage der Systemfreigabegröße, der Sonderfreigabegröße und des geplanten Nothaltemanövers, wobei sich das angepasste Nothaltemanöver von dem geplanten Nothaltemanöver in Abhängigkeit von der Eingabe des Beifahrers und der Systemfreigabegröße mehr oder weniger stark unterscheiden kann.

2. Verfahren nach Anspruch 1, **dadurch gekennzeichnet, dass**
die Umfelddaten für ein Verkehrsaufkommen im Umfeld des Fahrzeugs und/oder für eine Infrastruktur im Umfeld des Fahrzeugs charakteristisch sind.

3. Verfahren nach wenigstens einem der vorangegangenen Ansprüche, **dadurch gekennzeichnet, dass**
das geplante und/oder angepasste Nothaltemanöver wenigstens einen Fahrspurwechsel beinhaltet.

4. Verfahren nach wenigstens einem der vorangegangenen Ansprüche, **dadurch gekennzeichnet, dass**
die Systemfreigabegröße und/oder die Sonderfreigabegröße charakteristisch für den wenigstens einen Fahrspurwechsel und/oder eine zu befahrende Zielfahrspur sind.

5. Verfahren nach wenigstens einem der vorangegangenen Ansprüche, **dadurch gekennzeichnet, dass**
eine Anwesenheit des Beifahrers durch wenigstens eine Beifahrererkennungseinrichtung ermittelt wird.

6. Verfahren nach dem vorangegangenen Anspruch, **dadurch gekennzeichnet, dass** die Erzeugung der Sonderfreigabegröße durch dauerhaftes Betätigen eines Betätigungselements der Eingabeeinrichtung und/oder durch eine einmalige Betätigung eines weiteren Betätigungselements und/oder durch Sprachbedienung erfolgt.

7. Verfahren nach wenigstens einem der vorangegangenen Ansprüche, **dadurch gekennzeichnet, dass**
die Sonderfreigabegröße durch den Beifahrer zurückgezogen werden kann.

8. Verfahren nach wenigstens einem der vorangegangenen Ansprüche, **dadurch gekennzeichnet, dass**
das angepassten Nothaltemanövers auf Grundlage von weiteren Umfelddaten durchgeführt wird, wobei die weiteren Umfelddaten von einer Frontkamera des Fahrzeugs erfasst werden.

9. Nothaltevorrichtung zum Durchführen eines abgesicherten Nothaltemanövers eines sich bewegenden Fahrzeugs, wobei das Fahrzeug ein Nothalteassistenzsystem aufweist, welches dazu geeignet und bestimmt ist, eine Anhalteposition für einen Nothalt des Fahrzeugs und wenigstens ein geplantes Nothaltemanöver zu ermitteln, und wobei das Fahrzeug eine Einrichtung zum Ausführen eines automatischen Fahrmodus und zum Durchführen des geplanten Nothaltemanövers aufweist, wobei die Nothaltevorrichtung dazu eingerichtet ist, Fahrerzustandsdaten in Bezug auf eine Fahrtüchtigkeit eines Fahrers des Fahrzeugs von einer Fahrerüberwachungseinrichtung abzurufen, wobei die Nothaltevorrichtung dazu eingerichtet ist, Umfelddaten von einer Umfelderfassungseinrichtung abzurufen, wobei die Umfelddaten für die Umgebung des Fahrzeugs charakteristisch sind, mit einer Auswertungseinrichtung zum Auswerten der Umfelddaten und zum Erzeugen einer Systemfreigabegröße zur Freigabe des durch das Nothalteassistenzsystems geplanten Nothaltemanövers, wobei es sich bei der Systemfreigabegröße um eine Größe handelt, welche für ein Gefahrenpotential des geplanten Nothaltemanövers, welches als sicher, unsicher oder bedingt sicher eingestuft wird, charakteristisch ist wobei die Nothaltevorrichtung eine Überprüfungseinrichtung aufweist, welche dazu eingerichtet ist, in Abhängigkeit von der erzeugten Systemfreigabegröße, für den Fall, dass das geplante Nothaltemanöver als bedingt sicher eingestuft wurde, eine Aufforderung zur Freigabe des durch das Nothalteassistenzsystem geplanten Nothaltemanövers durch einen Beifahrer auszulösen und eine Sonderfreigabegröße in Abhängigkeit von einer Eingabe des Beifahrers zu erfassen, wobei Nothaltevorrichtung dazu eingerichtet ist, ein Durchführen eines angepassten Nothaltemanöver auf Grundlage der Systemfreigabegröße, der Sonderfreigabegröße und des geplanten Nothaltemanövers durch die Einrichtung zum Ausführen eines automatischen Fahrmodus und zum Durchführen des geplanten Nothaltemanövers auszulösen, wobei sich das angepasste Nothaltemanöver von dem geplanten Nothaltemanöver in Abhängigkeit von der Eingabe des Beifahrers und der Systemfreigabegröße mehr oder weniger stark unterscheiden kann.

10. Fahrzeug mit einer Nothaltevorrichtung nach dem vorhergehenden Anspruch.

## Claims

1. Method for performing a safe emergency stopping maneuver of a moving vehicle comprising the steps of:
- capturing (S1)
driver condition data relating to the fitness to drive of a driver of the vehicle by at least one driver monitoring device;
- initializing (S2) an emergency stopping assistance system on the basis of the captured driver condition data, wherein the emergency stopping assistance system determines a stopping position for the emergency stopping of the vehicle and at least one planned emergency stopping maneuver;
- capturing (S3)
environmental data with at least one environmental capture device, wherein the environmental data are characteristic of an environment of the vehicle;
- evaluating (S4)
the environmental data and generating a system release parameter to release the planned emergency stopping maneuver, wherein the system release parameter is a parameter that is characteristic of a hazard potential of the planned emergency stopping maneuver, which is classified as safe, unsafe or conditionally safe;
- depending on the generated system release parameter, in the event that the planned emergency stopping maneuver has been classified as conditionally safe, triggering (S7) a request by a passenger to release the planned emergency stopping maneuver and capturing a special release parameter depending on an input from the passenger;
- performing (S8, S10, S11) an adapted emergency stopping maneuver on the basis of the system release parameter, the special release parameter and the planned emergency stopping maneuver, wherein the adapted emergency stopping maneuver may differ more or less significantly from the planned emergency stopping maneuver depending on the input from the passenger and the system release parameter.

2. Method according to claim 1, **characterized in that**
the environmental data are characteristic of traffic volume in the environment of the vehicle and/or infrastructure in the environment of the vehicle.

3. Method according to at least one of the preceding claims,
**characterized in that**
the planned and/or adapted emergency stopping maneuver includes at least one lane change.

4. Method according to at least one of the preceding claims,
**characterized in that**
the system release parameter and/or the special release parameter are characteristic of the at least one lane change and/or a destination lane to be driven in.

5. Method according to at least one of the preceding claims,
**characterized in that**
the presence of the passenger is determined by at least one passenger detection device.

6. Method according to the preceding claim, **characterized in that**
the special release parameter is generated by continuously actuating an actuating element of the input device and/or by a single actuating of another actuating element and/or by voice control.

7. Method according to at least one of the preceding claims,
**characterized in that**
the special release parameter can be withdrawn by the passenger.

8. Method according to at least one of the preceding claims,
**characterized in that**
the adapted emergency stopping maneuver is performed on the basis of additional environmental data, which are captured by a front camera of the vehicle.

9. Emergency stopping apparatus for performing a safe emergency stopping maneuver of a moving vehicle, wherein the vehicle has an emergency stopping assistance system which is suitable and intended to determine a stopping position for an emergency stopping of the vehicle and at least one planned emergency stopping maneuver, and wherein the vehicle has a device for executing an automatic driving mode and for performing the planned emergency stopping maneuver, wherein the emergency stopping apparatus is configured to retrieve driver condition data relating to the fitness to drive of a driver of the vehicle from a driver monitoring device, wherein the emergency stopping apparatus is configured to retrieve environmental data from an environmental capture device, wherein the environmental data are characteristic of the environment of the vehicle, with an evaluation device for evaluating the environmental data and for generating a system release parameter to release the emergency stopping maneuver planned by the emergency stopping assistance system, wherein the system release parameter is a parameter that is characteristic of a hazard potential of the planned emergency stopping maneuver, which is classified as safe, unsafe or conditionally safe, wherein
the emergency stopping apparatus has a verification device which, depending on the generated system release parameter, in the event that the planned emergency stopping maneuver has been classified as conditionally safe, is configured to trigger a request by a passenger to release the emergency stopping maneuver planned by the emergency stopping assistance system and to capture a special release parameter depending on an input from the passenger, wherein the emergency stopping apparatus is configured to trigger the execution of an adapted emergency stopping maneuver on the basis of the system release parameter, the special release parameter and the planned emergency stopping maneuver by the device for executing an automatic driving mode and for performing the planned emergency stopping maneuver, wherein the adapted emergency stopping maneuver may differ more or less significantly from the planned emergency stopping maneuver depending on the input from the passenger and the system release parameter.

10. Vehicle comprising an emergency stopping apparatus according to the preceding claim.

## Revendications

1. Procédé permettant de réaliser une manœuvre d'arrêt d'urgence sécurisée d'un véhicule en mouvement, comprenant les étapes de :
- détection (S1)
de données d'état de conducteur relatives à une aptitude à la conduite d'un conducteur du véhicule par au moins un moyen de surveillance de conducteur ;
- initialisation (S2) d'un système d'assistance d'arrêt d'urgence sur la base des données d'état de conducteur détectées, dans lequel le système d'assistance d'arrêt d'urgence détermine une position d'arrêt pour l'arrêt d'urgence du véhicule et au moins une manœuvre d'arrêt d'urgence planifiée ;
- détection (S3)
de données d'environnement avec au moins un moyen de détection d'environnement, dans lequel les données d'environnement sont caractéristiques d'un environnement du véhicule ;
- évaluation (S4)
des données d'environnement et génération d'une variable d'approbation de système pour l'approbation de la manœuvre d'arrêt d'urgence planifiée, dans lequel la variable d'approbation de système est une variable qui est caractéristique d'un potentiel de danger de la manœuvre d'arrêt d'urgence planifiée qui est classée comme sûre, non sûre ou partiellement sûre ;
- en fonction de la variable d'approbation de système générée, dans le cas où la manœuvre d'arrêt d'urgence planifiée a été classée comme étant partiellement sûre, déclenchement (S7) d'une demande d'approbation de la manœuvre d'arrêt d'urgence planifiée par un passager et détection d'une variable d'approbation spéciale en fonction d'une saisie du passager ;
- réalisation (S8, S10, S11) d'une manœuvre d'arrêt d'urgence adaptée sur la base de la variable d'approbation de système, de la variable d'approbation spéciale et de la manœuvre d'arrêt d'urgence planifiée, dans lequel la manœuvre d'arrêt d'urgence adaptée peut différer plus ou moins de la manœuvre d'arrêt d'urgence planifiée en fonction de la saisie du passager et de la variable d'approbation de système.

2. Procédé selon la revendication 1, **caractérisé en ce que**
les données d'environnement sont caractéristiques d'un volume de trafic dans l'environnement du véhicule et/ou d'une infrastructure dans l'environnement du véhicule.

3. Procédé selon au moins l'une des revendications précédentes, **caractérisé en ce que**
la manœuvre d'arrêt d'urgence planifiée et/ou adaptée contient au moins un changement de voie de circulation.

4. Procédé selon au moins l'une des revendications précédentes, **caractérisé en ce que**
la variable d'approbation de système et/ou la variable d'approbation spéciale sont caractéristiques de l'au moins un changement de voie de circulation et/ou d'une voie de circulation cible vers laquelle se diriger.

5. Procédé selon au moins l'une des revendications précédentes, **caractérisé en ce que**
une présence du passager est déterminée par au moins un moyen de reconnaissance de passager.

6. Procédé selon la revendication précédente, **caractérisé en ce que**
la génération de la variable d'approbation spéciale s'effectue par actionnement permanent d'un élément d'actionnement du moyen de saisie et/ou par un actionnement unique d'un autre élément d'actionnement et/ou par commande vocale.

7. Procédé selon au moins l'une des revendications précédentes, **caractérisé en ce que**
la variable d'approbation spéciale peut être retirée par le passager.

8. Procédé selon au moins l'une des revendications précédentes, **caractérisé en ce que**
la manœuvre d'arrêt d'urgence adaptée est réalisée sur la base d'autres données d'environnement, dans lequel les autres données d'environnement sont détectées par une caméra avant du véhicule.

9. Dispositif d'arrêt d'urgence pour la réalisation d'une manœuvre d'arrêt d'urgence sécurisée d'un véhicule en mouvement, dans lequel le véhicule présente un système d'assistance d'arrêt d'urgence qui est adapté et destiné à déterminer une position d'arrêt pour un arrêt d'urgence du véhicule et au moins une manœuvre d'arrêt d'urgence planifiée, et dans lequel le véhicule présente un moyen pour l'exécution d'un mode de conduite automatique et pour la réalisation de la manœuvre d'arrêt d'urgence planifiée, dans lequel le dispositif d'arrêt d'urgence est conçu pour récupérer des données d'état de conducteur relatives à une aptitude à la conduite d'un conducteur du véhicule à partir d'un moyen de surveillance de conducteur, dans lequel le dispositif d'arrêt d'urgence est conçu pour récupérer des données d'environnement à partir d'un moyen de détection d'environnement, dans lequel les données d'environnement sont caractéristiques de l'environnement du véhicule, avec un moyen d'évaluation pour l'évaluation des données d'environnement et pour la génération d'une variable d'approbation de système pour l'approbation de la manœuvre d'arrêt d'urgence planifiée par le système d'assistance d'arrêt d'urgence, dans lequel la variable d'approbation de système est une variable qui est caractéristique d'un potentiel de danger de la manœuvre d'arrêt d'urgence planifiée, qui est classée comme sûre, non sûre ou partiellement sûre, dans lequel
le dispositif d'arrêt d'urgence présente un moyen de vérification qui est conçu pour déclencher, en fonction de la variable d'approbation de système générée, dans le cas où la manœuvre d'arrêt d'urgence planifiée a été classée comme partiellement sûre, une demande d'approbation de la manœuvre d'arrêt d'urgence planifiée par le système d'assistance d'arrêt d'urgence par un passager et pour saisir une variable d'approbation spéciale en fonction d'une saisie du passager, dans lequel le dispositif d'arrêt d'urgence est conçu pour déclencher une réalisation d'une manœuvre d'arrêt d'urgence adaptée sur la base de la variable d'approbation de système, de la variable d'approbation spéciale et de la manœuvre d'arrêt d'urgence planifiée par le moyen pour exécuter un mode de conduite automatique et pour réaliser la manœuvre d'arrêt d'urgence planifiée, dans lequel la manœuvre d'arrêt d'urgence adaptée peut différer plus ou moins fortement de la manœuvre d'arrêt d'urgence planifiée en fonction de la saisie du passager et de la variable d'approbation de système.

10. Véhicule comportant un dispositif d'arrêt d'urgence selon l'une des revendications précédentes.
